# EUROPEAN PATENT APPLICATION

(11) **EP 3 666 353 A1**
(43) Date of publication of application: **17.06.2020**
(21) Application number: 19215381.5
(22) Date of filing: 11.12.2019
(51) Int. Cl.: A63F 13/48, A63F 13/795, A63F 13/87, H04L 12/58, H04L 12/18

(54) **METHODS AND SYSTEMS FOR CONNECTING A PLURALITY OF USERS TO A LOBBY OF AN ONLINE APPLICATION**

(30) Priority: 12.12.2018 SE 1851566
(71) Applicant: Znipe Esports AB, 115 27 Stockholm (SE)
(72) Inventor: ÅKERFELDT, Erik, 191 46 Sollentuna (SE); NISSAR, Hugo, 177 44 Järfälla (SE)
(74) Representative: Bergenstråhle Group AB

(57) **Abstract**

Disclosed is a method for connecting a plurality of users to a lobby of an online application, wherein the online application is capable of hosting a first lobby (110) and a second lobby (120). The method comprises monitoring (202) the first lobby (110) of the online application and detecting (204) an event related to a status of the first lobby (110). The method further comprises, based on the detected event, determining (206) the status of the first lobby (110), and based on the status of the first lobby (110), connecting (210) the plurality of users to one of the first and second lobbies of the online application.

## Description

### Technical field

The present disclosure relates generally to methods, systems and devices for helping a plurality of users connect to the same lobby in an online application, such as an e-sports game.

### Background

Today, there are a vast number of different online applications that can be used by a plurality of users at the same time. An online application is an application for execution and use online, i.e. over a computer network such as the Internet, and for use by one or more users. Such online application involves one or more executing computer softwares that typically, at least partly, execute remotely from the users, e.g. on one or more servers, and that the users, via some software on user machines, e.g. computers, are connected to, via the network, when using the online application. The online application may also involve some software part that execute on the user machine and which may be referred to as client software or a client software part of the online application.

Many of these online applications are in the form of online games that can be played by a plurality of users, even though there are other forms of online applications where users might want to be placed in the same lobby or server. A lobby of an online application, e.g. of an online multiuser game application, may be described as a virtual waiting room of the online application, where users gather and are waiting for the lobby to start whereby the users in the lobby become enabled to use the online application simultaneously in a coordinated manner.

When using a multi-user online application, there may or may not be functionality present for a user to group up with other users. For example, in the case of an online game, there may be functionality available for all players to play in the same match of a game, for example by joining the same party before starting a new game.

However, in many cases, functionality for enabling a plurality of users to play together, or for using the same online application simultaneously in a coordinated manner, is lacking. For example, there might be a limitation to the number of users allowed in the same party or group, that is lower than the amount of players allowed in a lobby of an online application.

### Summary

In view of the above an object is to provide one or more improvements or alternatives to the prior art, e.g. to address at least some of the problems and issues outlined above, such as to enable improved multi-user functionality for online applications, especially in the case of multiplayer online games.

Particularly it is desirable to facilitate for a plurality of users to use an online application, e.g. play, together, or in other words to use the online application simultaneously in a coordinated manner, such as to facilitate for the plurality of users to connect to the same lobby in the online application. The plurality of users may thus be users with an intention to use the online application, e.g. play, together. This is especially relevant for online applications where such functionality is missing altogether, but it may also be relevant to facilitate this for online applications where similar functionality already exists.

According to one aspect, a method is provided for connecting a plurality of users to a lobby of an online application, wherein the online application is capable of hosting a first lobby and a second lobby. The method comprises monitoring the first lobby of the online application and detecting an event related to a status of the first lobby. The method further comprises determining the status of the first lobby, based on the detected event. The method further comprises connecting the plurality of users to one of the first and second lobbies of the online application, based on the status of the first lobby.

According to an embodiment, the method further comprises determining a status of the second lobby based on the detected events from the first lobby, and further wherein the connecting is further based on the status of the second lobby.

According to an embodiment, the method further comprises monitoring the second lobby as well.

According to an embodiment, detecting an event related to the status of the first lobby and/or detecting an event related to the status of the second lobby comprises detecting at least two events related to the first and second lobbies, respectively.

According to an embodiment, monitoring the first lobby comprises connecting one or more bots to the first lobby, and wherein the detecting comprises the one or more bots detecting an availability for new users in the first lobby.

According to an embodiment, the detected event is a number of available user slots in the first lobby, and the determining a status of the second lobby comprises determining a time until the second lobby is made available. Determining a time until the second lobby is made available may comprise estimating a time until the second lobby is made available.

According to an embodiment, the method further comprises obtaining an ID of the first lobby and an ID of the second lobby.

According to an embodiment, the plurality of users are only connected to the second lobby if the ID of the second lobby is different from the ID of the first lobby.

According to an embodiment, the method further comprises, subsequent to connecting the plurality of users to the second lobby, determining if each of the plurality of users is connected to the second lobby, and when at least one of the plurality of users is not connected to the second lobby, disconnecting the rest of the plurality of users from the second lobby.

According to another aspect, a system is provided for connecting a plurality of users to a lobby of an online application, wherein the online application is capable of hosting a first lobby and a second lobby. The system comprises processing circuitry and optionally a memory, wherein the memory contains instructions executable by said processing circuitry, whereby said system is operative for monitoring the first lobby of the online application and detecting an event related to a status of the first lobby. The system is further operative for, based on the detected event, determining the status of the first lobby, and based on the status of the first lobby, connecting the plurality of users to one of the first and second lobbies of the online application.

According to other aspects, computer programs and carriers are also provided, the details of which will be described in the claims and the detailed description.

Determining the status of the first lobby based on the detected event and connecting the plurality of users to one of the first and second lobbies of the online application based on the status of the first lobby, supports connection of the plurality of users to the same lobby. Since other users also may join a lobby, a lobby may start before all of the plurality of users are connected to it. This can be avoided thanks to embodiments herein. For example, the detected event and status of the first lobby, which e.g. may relate to the number of users in the first lobby and the amount of users required for the first lobby to start, may indicate that the plurality of users will not be able to, or are not likely be able to, join before the first lobby will start. The plurality of users may then instead be connected to the second lobby, e.g. when it is made available for users to connect to. If the status instead would indicate that all of the plurality of users would be able to join the first lobby, they may of course be connected to the first lobby. In other words, embodiments herein facilitate for the plurality of users to connect to the same lobby and thereby to use the online application together.

Further possible features and benefits of this solution will become apparent from the detailed description below.

### Brief description of drawings

The solution will now be described in more detail by means of exemplary embodiments and with reference to the accompanying drawings, in which:
Fig. 1 shows a visualization of a first lobby and second lobby.
Fig. 2 schematically shows steps of a method according to an embodiment.
Fig. 3 is a schematic block diagram illustrating a system according to embodiments herein for performing the method.

### Detailed description

Briefly described, the present disclosure relates to methods and systems for connecting a plurality of users to the same lobby in an online application, for example the lobby of an online multiplayer game. The online application is capable of hosting a first lobby and a second lobby, which may also be seen as that the online application may comprise one or more servers capable of hosting a first and second lobby. The method comprises monitoring a first lobby in order to find indications related to a status of the lobby, wherein the status of the lobby denotes information related to when the lobby will start. In the case of a multiplayer game, a start of the lobby would in most cases be synonymous to the start of a new match or game. The method further comprises detecting an event related to the status of the first lobby. An event related to the status of the lobby is something that can be used to deduct when the lobby will start, that the lobby is starting, and/or that the lobby has started. Examples of such events are the amount of players in the lobby and the amount of players required for the lobby to start, a countdown indicating a start of the lobby, the actual start of a lobby, and similar information. Based on these events, a status of the first lobby is determined, and a status of a second lobby is determined. This may be based on information regarding the specific lobby behavior of the online application in question. After a status of the second lobby, which may also be seen as a new lobby, has been determined, the plurality of users may be connected to the second lobby, based on the determined status of the second lobby and the status of the first lobby. The aim is to connect the plurality of users to a lobby at such a point in time that all of the users of the plurality of users, which may be seen as a party of a group in the online application, can connect to the same lobby. For example, if the first lobby only has 7 slots available, but the party consists of 10 users, it would not be possible to connect all the users in the group to the same lobby, until a second lobby has been started that has at least 10 slots available. The present disclosure is intended to provide a solution for users that would like to use an online application together, such as when playing a game together as a party in an online game. The solution will now be described more in detail, with reference to the accompanying drawings.

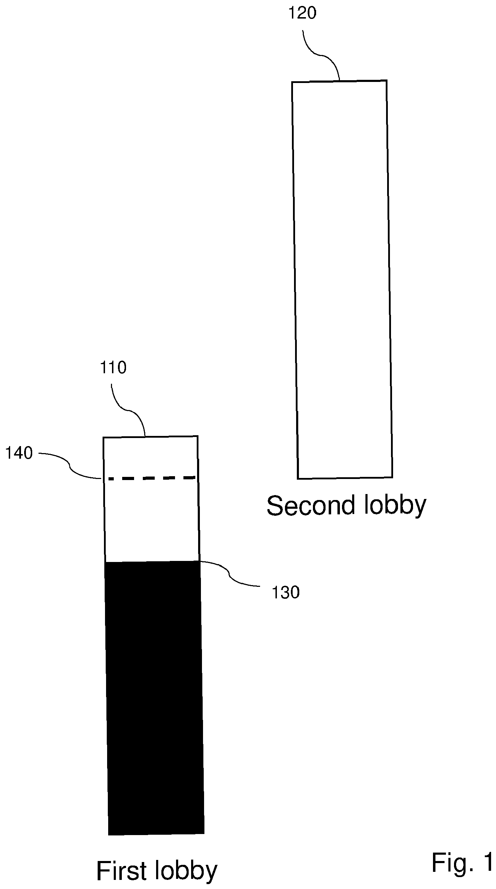

Fig. 1 schematically shows a visualization of a first lobby 110 and second lobby 120. The first and second lobby represent virtual lobbies of an online application. In some embodiments, the first and second lobby may be located on a first and second server, respectively. In some embodiments, the first and second lobbies are located on the same server. The first and second servers may be different physical entities, or they may be different virtual servers located on the same physical entity. In some embodiments, the server and/or other entity that performs the method may be a group of network nodes, wherein functionality for performing the method are spread out over different physical, or virtual, nodes of the network. In other words, the system for may be a cloud-solution, i.e. the system may be deployed as cloud computing resources that may be distributed in the network.

In Fig. 1, the first lobby 110 has an amount of users connected to it, which is visually represented by a first level 130 indicating how large part of a total amount of available slots are currently occupied, in relation to the total number of slots available. In Fig. 1, the first lobby 110 would be considered full when the first level 130 representing the amount of users reaches the top of the rectangle representing the lobby 110. In order to provide a seamless and smooth experience for users, it is very likely that a second lobby 120 would be opened before the first lobby 110 is completely full. Since it can be assumed that starting up a new lobby takes some amount of time, if a second lobby 120 is only opened when the first lobby 110 starts, there would be a time period between the first lobby 110 starts and the second lobby 120 becomes available, equal to at least the amount of time it takes to start a new lobby.

In order to avoid having time periods where no lobby is available to users, a second lobby 120 may be started before the first lobby 110 is completely full. In other words, the second lobby 120 may be made available based on a certain amount of the available slots in the first lobby being occupied, which is represented by a second level 140 in Fig. 1. In some embodiments, the second level 140 is expressed as a percentage of the total amount of slots. In some embodiments, the second level 140 is expressed as a number of users remaining until the first lobby 110 becomes full. The second lobby 120 is made available when the second level 140 of the first lobby is reached, in terms of how many users are connected to the first lobby. In some embodiments, the second level 140 is reached when the first lobby is full. The second level 140 may in some embodiments be seen as the point or level where the online application starts routing new players towards the second lobby rather than the first lobby.

Based on this insight, it becomes possible to use information regarding the amount of available slots in the first lobby 110 together with information regarding which level 140 is required for starting the second lobby 120, and optionally information regarding a rate of change of the amount of available slots in the first lobby 110, in order to deduce when the second lobby 120 is made available, i.e. when it becomes possible for a user to connect to the second server.

In some embodiments, the first and second lobbies are both available simultaneously, but the online application only starts to connect users to the second lobby after a certain level of users in the first lobby has been reached, which may also be seen as represented by the level 140 in Fig. 1. In some embodiments, the second lobby may be created before the first lobby. In some embodiments, the second lobby may also be started before the first lobby. For example, the online application may start rerouting users to the second lobby at the level 140, and if some users then leave the first lobby after the second level 140 has been reached, but before the first lobby is started, it is possible that the second lobby could start before the first lobby.

In some embodiments, a user of the online application cannot choose which lobby to connect to, instead the user can only choose to enter the currently available lobby. However, in some embodiments, there is information available to a user connected to a lobby regarding an identity, i.e. ID of the lobby. In implementations comprising such information, it becomes possible to use the lobby ID in order to ensure that all users of the plurality of users that wishes to connect to the same lobby are connected to the lobby, and possibly disconnecting the remaining users in case everyone did not connect for some reason.

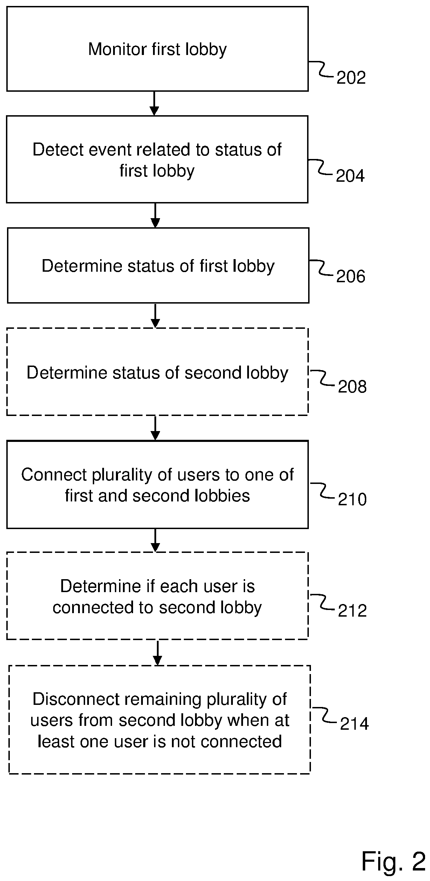

Fig. 2, e.g. in conjunction with Fig. 1, shows an embodiment of a method performed by a system in a data communications network, for connecting a plurality of users, e.g. players, to a lobby. As should be realized, the plurality of users may correspond to a certain subgroup of a larger amount of users or players that want to use an online application, e.g. play, together, or in other words to use the online application simultaneously in a coordinated manner. The data communications network comprises at least a game server which is hosting or has the capability to host a first and second lobby. The system performing the method may be any entity connected to the game server, comprising a memory and processing circuitry which is adapted to perform the method steps according to embodiments described herein.

The method comprises a first step 202 of monitoring a first lobby of an online application. The step of monitoring 202 may comprise connecting to the first lobby in order to access information which is only available when connected to the first lobby. In some embodiments, connecting to the first lobby may comprise connecting a bot to the first lobby, wherein the bot represents a virtual programmed entity, which may be adapted to automatically extract information related to the status of the first lobby, from the first lobby. As previously mentioned, for the purpose of this application the status of a lobby is information related to a starting time of that lobby. Common examples of such status information include the amount of players in the lobby, the total amount of players needed for the lobby to start, a countdown timer showing the time remaining until start, time elapsed since the last lobby started, but as will be understood there are many other types of information that may be relevant, as long as it pertains to the starting time of the lobby or may be used to deduce information related to the starting time of the lobby.

In some embodiments, monitoring step 202 may comprise connecting a plurality of bots to the first lobby and using information regarding the detected event obtained from each or some of the plurality of bots. In some embodiments, a first event is detected by a first bot, a second event is detected by a second bot, a third event is detected by a third bot, and so on. In some embodiments, a first event is detected by each of the plurality of bots, the second event is detected by each of the plurality of bots, and so on. In some embodiments, a combination of the above examples may be used, for example the first event may be detected by each of the plurality of bots and the second event may be detected by some, but not all, of the plurality of bots.

In some embodiments, the method may further comprise monitoring the second lobby as well, which may be performed similarly as the monitoring of the first lobby except that it is performed on the second lobby instead. In embodiments comprising more lobbies than two, the method may further comprise monitoring each of the additional lobbies.

The information further comprises a step of detecting 204 an event related to the status of the first lobby, wherein the detected event is the type of status information as described above, i.e. any event which may be used to determine or deduct information regarding a start time of the first lobby. In some embodiments, the step of detecting 204 an event related to the status of the first lobby comprises detecting at least two events related to the status of the first lobby. In embodiments where at least two events are detected, the method may in some embodiments further comprise determining a rate of change for some type of information that is detected in the first and second events, for example a rate of change regarding how fast new players join the lobby. In some embodiments, the detecting step 204 comprises detecting more than two events.

As an example, the first detected event may be the amount of users, e.g. players, present in the lobby at a first point in time. A second detected event may be the amount of users or players present in the lobby at a second time. Another example may be that the first event is a countdown timer indicating that there are 30 seconds until the start of a lobby, and the second event may be a countdown timer indicating that there are 25 seconds remaining until the start of a lobby.

The method further comprises a step of determining 206 a status of the first lobby, based on the detected event. In embodiments wherein the detecting step 204 comprises detecting at least two events, the determining step 206 may be based on the at least two detected events. In some embodiments, a time difference between the detected events may also be determined. By using the information gained from the detected event or events, the status of the first lobby may be determined. In some embodiments, determining a status of the first lobby comprises determining a start time for the first lobby. In some embodiments, determining a status of the first lobby comprises determining whether the lobby is about to start or not. In some embodiments, determining a status of the first lobby comprises determining that the first lobby is in the process of getting started, or that it has just started.

In some embodiments, determining the status of the first lobby may further comprise determining a rate of change related to the amount of users present in the first lobby, or related to how much time there is left before the lobby starts. The rate of change may be calculated in any suitable manner, for example by linear analysis or based on statistical data gathered from the first and second lobbies during some period of time. In some embodiments, at least two measurements at two different points in time are needed in order to calculate a rate of change, or to calculate an estimate for the rate of change, wherein the estimate may be used in method steps described herein.

In some embodiments, the rate of change may be based on historical information regarding the rate of change of players in a lobby of the online application, rather than information specific to the lobby in question. In some embodiments, a combination of historical information and information for the lobby in question may be used.

The method may in some embodiments comprise a step of determining 208 a status of a second lobby. Determining 208 a status of the second lobby is especially relevant in embodiments wherein the first lobby is already full, or is close to getting full, since this entails that it is likely that the plurality of users cannot be connected to the first lobby and therefore they would likely get connected to the second lobby instead.

In this application, the second lobby denotes a lobby which is different from the first lobby, i.e. another lobby than the first lobby. In some embodiments, the second lobby is made available after the first lobby becomes available. In some embodiments the first and second lobbies may be available at the same time. The second lobby may in some embodiments become available immediately after the first lobby is made available, and in some embodiments the second lobby is only made available after the first lobby hast started. In some embodiments, the second lobby is made available when the first lobby reaches a predetermined amount of users. In some embodiments, the second lobby may be hosted at the same time as the first lobby, but only made available to users after the first lobby has reached a certain level of users.

In some embodiments, determining 208 a status of the second lobby comprises predicting a status of the second lobby, based on information from the first lobby. For example, if a status of the first lobby is calculated such that there is an estimation regarding when the first lobby is about to start, then the status of the second lobby may be predicted as soon becoming available to users. When the second lobby would become available to users in such an embodiment could be based on e.g. historical data regarding how it usually takes until the second lobby starts after the first lobby has been determined to have the status that was determined in step 206.

In some embodiments, determining 208 a status of the second lobby comprises determining a status of the second lobby based on information from both the first lobby and the second lobby.

The status of the second lobby may be also be determined based on a rate of change of users in a lobby, which may be both historical data regarding a rate of change of the amount of users in a lobby and data regarding the current rate of change of users in the first lobby. In some embodiments, the determined status of the second lobby may comprise information regarding an observable status of the second lobby. As will be understood, in some embodiments the determined status of the second lobby may be that there is no second lobby available, in case the first lobby has not yet reached the level 140 required for a second lobby to start.

The method further comprises a step of connecting 210 the plurality of users to one of the first and the second lobbies, based on the determined status of the first lobby, wherein the connecting 210 is done such that all of the plurality of users are connected to the same lobby. In embodiments wherein the status of the second lobby is also determined, the connecting step 210 may also be based on the determined status of the second lobby. In case there are enough available slots in the first lobby, when taking the relevant factors into account, the plurality of users are connected to the first lobby. In case there are not enough available spots in the first lobby, when taking the relevant factors into account, the plurality of users are connected to the second lobby, as long as there are enough available slots in the second lobby, when taking the relevant factors into account. The relevant factors mentioned above may be taking rate of change of users in the first lobby into account as well as the current level of users, and the expected time to connect the plurality of users which are waiting to be connected. For example, if 10 users are waiting to be connected together and the first lobby is determined to have 10 slots left, the method may comprise waiting until the second lobby is made even though there would technically be a number of slots available that was equal to the plurality of users, since it may be unlikely that all of the 10 users will manage to get all remaining slots without another user connecting during the same time.

Factors for determining which lobby to connect the plurality of users to may include the current amount of players in the first lobby, the maximum slots available in the first lobby, and optionally a rate of change of the number of users in the first lobby.

In some embodiments, there may be more than two lobbies to consider. For example, the method may further comprise determining the status of a third lobby, based on information related to the status of the first lobby, the second lobby, and/or of the third lobby. As will be understood, in some embodiments, the same may be done for a fourth server, a fifth server, and so on as well.

In some embodiments, the method further comprises a step of determining 212 if each user of the plurality of users is connected to the one of the first and second lobbies. This step may be done in order to ensure that all of the plurality of users are actually connected to the first or second lobby, before the first or second lobby is started. Even though the method comprises a step of connecting 210 the plurality of users to the first or second lobby, there are factors that could make it such that some users of the plurality of users are connected while some are not, for examples differences in network connections between the users.

The method may further comprise a step 214 of disconnecting the plurality of users from the one of the first and second lobbies, in case it is determined in step 212 that at least one user of the plurality of users is not connected. By having the disconnecting step 214, it becomes possible to further decrease the risk that some players in a party will not be able to play with the rest of the party.

In some embodiments, the method may be performed such that it takes more lobbies than two into account as well. The method may further comprise determining a status of a third lobby, a fourth lobby, and so on. As will be understood, there is no limitation to the amount of lobbies that can be analyzed in order to determine to which lobby the plurality of users could be connected, but it is likely that taking too many lobbies into account is not beneficial. However, in some embodiments the method may thus comprise that a

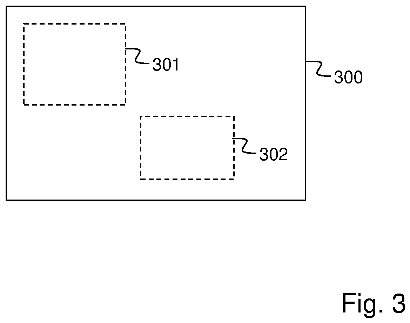

Method(s) and actions described herein may be performed by any device which is capable of performing them, for example as exemplified in Fig. 3, a system 300 comprising one or more devices and that comprises processing circuitry 301, e.g. one or more processors, and e.g. memory 302. Said device(s) may thus correspond to a data processing device(s) or computer(s), configured to perform said method(s) and actions. The system 300, or device(s) thereof, as should be realized, typically also comprises input/output (I/O) means or circuitry configured to be involved in, e.g. by performing, communication within, and/or, to and/or from the system 300, device(s) thereof, and e.g. other units and/or devices, such as involved in sending and/or receiving information, e.g. in a network that the system may be comprised in and/or configured to operate with, and that typically is the same network that also the online application is used with. In some embodiments, the device or devices performing the methods herein may be a group of network nodes, wherein functionality for performing the method are spread out over different physical, or virtual, nodes of a network. In other words, the system 300 may be a cloud-solution, i.e. the system 300 may be deployed as cloud computing resources that may be distributed in the network.

There may be a computer program comprising computer readable code and/or computer readable code means to be run in, i.e. executed by, the system 300 and/or said processing circuitry 301, to thereby cause the system to perform said method(s) and actions. In other words, when the code it executed, it causes the system to perform said method(s) and actions. The computer program may be comprised, such as loaded and/or stored, in the memory 302. There may further be a carrier comprising the computer program, wherein the carrier may be one of an electronic signal, optical signal, radio signal or computer readable storage medium. The carrier may be for intermediate storage and/or transport of the computer program, e.g. to enable it to be loaded in the memory 302.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited. Reference to an element in the singular is not intended to mean "one and only one" unless explicitly so stated, but rather "one or more." All structural and functional equivalents to the elements of the above-described embodiments that are known to those of ordinary skill in the art are expressly incorporated herein by reference and are intended to be encompassed hereby. Moreover, it is not necessary for an apparatus or method to address each and every problem sought to be solved by the presently described concept, for it to be encompassed hereby. In the exemplary figures, a broken line generally signifies that the feature within the broken line is optional.

## Claims

1. A method for connecting a plurality of users to a lobby of an online application, wherein the online application is capable of hosting a first lobby (110) and a second lobby (120), comprising the steps:
monitoring (202) the first lobby (110) of the online application;
detecting (204) an event related to a status of the first lobby (110);
based on the detected event, determining (206) the status of the first lobby (110); and
based on the status of the first lobby (110), connecting (210) the plurality of users to one of the first and second lobbies of the online application.

2. The method according to claim 1, wherein the detecting (204) an event related to the status of the first lobby (110) comprises detecting at least two events related to the first lobby.

3. The method according to any one of claims 1 to 2, further comprising:
determining (208) a status of the second lobby (120), based on the detected event, and wherein the connecting (210) the plurality of users is further based on the status of the second lobby (120).

4. The method according to claim 3, wherein the detected event related to the first lobby is a number of available user slots in the first lobby (110), and wherein the determining (208) a status of the second lobby comprises determining a time until the second lobby is made available.

5. The method according to any one of claims 3 to 4, further comprising monitoring the second lobby, and wherein the detecting (204) an event further comprises detecting an event related to the status of the second lobby.

6. The method according to any one of claims 1 to 5, further comprising obtaining an identity of the first lobby (110) and an identity of the second lobby (120).

7. The method according to claim 6, further wherein the plurality of users is only connected to the second lobby (120) if the identity of the second lobby (120) is different from the identity of the first lobby (110).

8. The method according to any one of claims 1-7, further comprising:
subsequent to connecting the plurality of users to the second lobby (120),
determining if each of the plurality of users is connected to the second lobby (120); and
when at least one of the plurality of users is not connected to the second lobby (120), disconnecting the rest of the plurality of users from the second lobby (120).

9. A system for connecting a plurality of users to a lobby of an online application, wherein the online application is capable of hosting a first lobby (110) and a second lobby (120), comprising:
processing circuitry; and
memory, said memory containing instructions executable by said processing circuitry, whereby said system is operative for:
monitoring the first lobby (110) of the online application;
detecting an event related to a status of the first lobby (110);
based on the detected event, determining the status of the first lobby (110); and
based on the status of the first lobby (110), connecting the plurality of users to one of the first and second lobbies of the online application.

10. A computer program comprising computer readable code means to be run in a system according to claim 9, which computer readable code means when run in the system causes the system to perform the following steps:
monitoring the first lobby (110) of the online application;
detecting an event related to a status of the first lobby (110);
based on the detected event, determining the status of the first lobby (110); and
based on the status of the first lobby (110), connecting the plurality of users to one of the first and second lobbies of the online application.

11. A carrier containing the computer program according to claim 10, wherein the carrier is one of an electronic signal, optical signal, radio signal or computer readable storage medium.
